## Europäisches Patentamt
## European Patent Office
## Office européen des brevets

(11) Veröffentlichungsnummer: **0 132 776**
A2

(12) **EUROPÄISCHE PATENTANMELDUNG**

(21) Anmeldenummer: 84108465.0

(22) Anmeldetag: 18.07.84

(51) Int. Cl.⁴: **B 65 D 19/00**

(30) Priorität: 30.07.83 DE 3327581

(43) Veröffentlichungstag der Anmeldung:
13.02.85 Patentblatt 85/7

(84) Benannte Vertragsstaaten:
AT BE CH DE FR GB IT LI NL SE

(71) Anmelder: Enzler Kunststofftechnik Enzler + Co.
Weiler Weg 10
D-8873 Ichenhausen(DE)

(72) Erfinder: Enzler, Herbert
Weiler Weg 10
D-8873 Ichenhausen(DE)

(74) Vertreter: Munk, Ludwig, Dipl.-Ing.
Prinzregentenstrasse 1
D-8900 Augsburg(DE)

(54) Palettensystem.

(57) Bei der Herstellung von als Kunststoff-Tiefziehformlinge ausgebildeten Paletten wird zur Erzielung einer hohen Produktvielfalt bei gleichzeitigem geringem Herstellungsaufwand ein Modell (16) verwendet, das einen umlaufenden Kasten (19), eine hiervon getrennte Bodenplatte (20) und eine ebenfalls hiervon getrennte Randleiste (21) aufweist, wobei einem umlaufenden Kasten (19) jeweils mehrere Bodenplatten (20) und/oder Randleisten (21) als Wechselelemente zugeordnet sind. Hierdurch ergeben sich Paletten, die im Bereich eines umlaufenden Rahmens praktisch dieselbe Wandkontur aufweisen und die sich lediglich in der Profilierung ihres Bodens und/oder ihrer Randklaue unterscheiden.

FIG 3

EP 0 132 776 A2

## Palettensystem

Die Erfindung betrifft gemäß einem ersten Erfindungsgedanken ein Palettensystem mit mehreren, aus Kunststoff bestehenden Paletten, die jeweils die Form einer stapelbaren Wanne mit einem umlaufenden Rahmen, an den einerseits ein Boden und andererseits eine Randklaue angeformt sind, aufweisen, und geht gemäß einem weiteren Erfindungsgedanken auf eine Vorrichtung zur Herstellung eines derartigen Palettensystems.

Die Bereitstellung von Werkstücken auf Paletten gewinnt durch den steigenden Einsatz von Industrierobotern immer mehr an Bedeutung, da hierbei eine genaue Positionierung und Orientierung der Werkstücke sichergestellt ist und dennoch eine einfache Stapelung und Transportierbarkeit gewährleistet wird sowie einfache Identifizierungsmöglichkeiten geboten werden. Diese Forderungen können jedoch nur durch werkstückspezifisch ausgebildete Paletten erfüllt werden. Es muß daher für jede Werkstückart eine spezielle Palette hergestellt werden. Dies kann einen hohen Aufwand zur Bereitstellung entsprechender Herstellungswerkzeuge und damit lange Wartezeiten und hohe Herstellungskosten erfordern, was sich negativ auf die Gesamtwirtschaftlichkeit auswirken kann.

Hiervon ausgehend ist es daher die Aufgabe der vorliegenden Erfindung ein Palettensystem mit an die Verhältnisse des jeweiligen Einzelfalls angepaßten Paletten zu schaffen, die trotz dieser erforderlichen Anpassung schnell und einfach produzierbar sind. Eine weitere Aufgabe der vorliegenden Erfindung besteht darin, eine einfache und wirtschaftliche Herstellvorrichtung zur Verfügung zu stellen.

Die auf das Palettensystem sich beziehende Aufgabe wird erfindungsgemäß dadurch gelöst, daß die einzelnen Paletten als Tiefziehformlinge ausgebildet sind, daß der umlaufende Rahmen sämtlicher Paletten dieselbe oder eine geometrisch ähnliche, durch eine obere und eine untere Stufe stufenförmig nach innen abgesetzte Wandkontur aufweist und daß die einzelnen Paletten sich jeweils nur durch die Höhe des umlaufenden Rahmens und/oder die Profilierung ihres Bodens und/oder ihrer Randklaue unterscheiden.

Diese Maßnahmen stellen sicher, daß die Paletten weitgehend identisch sind und daß Variationen nur dort möglich sind, wo derartige Variationen zur Anpassung an die werkstückspezifischen Verhältnisse des Einzelfalls erforderlich sind. Die durch die Doppelstufe nach innen abgestufte Wandkontur ermöglicht in jedem Falle eine Stapelung und zwar je nach Ausbildung der Randklaue eine Ineinander- bzw. Aufeinanderstapelung, d. h. eine Stützkraftübertragung über die Werkstücke oder über den umlaufenden Palettenrahmen. Dasselbe gilt für die Bewerkstelligung einer Staubdichtheit im Falle einer Aufeinanderstapelung. Die hier gegebenen Variationsmöglichkeiten erfordern eine schnelle Werkzeuganpassung. In dieser Hinsicht wirkt es sich besonders vorteilhaft aus, daß die erfindungsgemäßen Paletten als Kunststoff-Tiefziehformlinge ausgebildet sind, da hier ein vergleichsweise einfacher Werkzeugaufbau und daher vergleichsweise geringe Werkzeugkosten gewährleistet sind, so daß auch schon bei vergleichsweise geringen Stückzahlen eine gute Wirtschaftlichkeit erreicht wird.

Ausgehend von an sich bekannten Kunststoff-Tiefziehvorrichtnngen mit einem auf einem Halter aufnehmbaren Modell, dessen Innenkontur der Außenkontur des jeweils herzustellenden Gegenstands entspricht und dessen Innenraum an eine Vakuumquelle anschließbar ist, gelingt die Lösung der auf die Vorrichtung bezogenen Aufgabe in überraschend einfacher Weise dadurch, daß das Modell jeweils einen umlaufenden Kasten, eine hiervon getrennte Bodenplatte und eine ebenfalls hiervon getrennte Randleiste aufweist und daß einem umlaufenden Kasten jeweils mehrere Bodenplatten und/ oder Randleisten zugeordnet sind, die auswechselbar auf dem Halter bzw. dem Kasten festlegbar sind.

Die einem umlaufenden Kasten zugeordneten Bodenplatten bilden hierbei Wechseleinheiten, die gegeneinander austauschbar sind. Dasselbe gilt für die Randleisten. Je nach Herstellung einer bestimmten Palette müssen hierbei lediglich die entsprechende Bodenplatte und die entsprechende Randleiste eingesetzt werden. Der umlaufende Kasten, der einen wesentlichen, umfangreichen Bestandteil des Modells darstellt, wird dagegen nur einmal benötigt und läßt sich mit sämtlichen Bodenplatten und/oder Randleisten kombinieren. Dies ergibt in vorteilhafter Weise trotz einer hohen Vielseitigkeit besonders geringe Werkzeugkosten. Die mit der Erfindung erzielbaren Vorteile sind demnach insbesondere in einer hohen Variabilität und damit in einer ausgezeichneten Wirtschaftlichkeit zu sehen.

In vorteilhafter Weiterbildung der übergeordneten Maßnahmen können die der unteren Stufe entsprechende Modellkontur an die Bodenplatte und die der oberen Stufe zugeordnete Modellkontur an den umlaufenden Kasten angeformt sein. Hierdurch ist sichergestellt, daß die Querschnittskontur des umlaufenden Kastens sich unterhalb der der oberen Stufe entsprechenden Kontur nicht mehr ändert und praktisch eine Führung für die Bodenplatte bilden kann.

In weiterer Fortbildung dieses Erfindungsgedankens kann die Randkontur der Bodenplatte daher der im Bereich unterhalb der der oberen Stufe entsprechenden Modellkontur gleichbleibenden Querschnittskontur des umlaufenden Kastens entsprechen, wobei die Bodenplatte zweckmäßig mit Verschiebespiel stempelförmig in den umlaufenden Kasten eingreift und in der Höhe variabel festlegbar ist. Hierdurch ist es möglich, praktisch jeden gewünschten Abstand zwischen oberer Stufe und unterer Stufe einzustellen, ohne daß eine Änderung des Werkzeugs erforderlich wäre. Diese Maßnahmen stellen daher in vorteilhafter Weise sicher, daß mit ein und demselben Kasten sowie mit ein und derselben Bodenplatte Paletten mit jedem beliebigen Stufenabstand, also Paletten für jede beliebige Werkstückhöhe, herstellbar sind. Vorteilhaft kann die Bodenplatte dabei durch in der Höhe variierbare Distanzböcke unabhängig vom umlaufenden Kasten gegenüber dem Halter abstützbar sein. Diese Maßnahmen ergeben eine einfache und zuverlässige Abstützung der Bodenplatte und ermöglichen eine einfache Montage bzw. Demontage der einzelnen Modellbestandteile. Zweckmäßig können die Distanzböcke mehrteilig ausgebildet sein. Zur Änderung des Stufenabstands braucht hierbei demnach lediglich ein zusätzliches Unterlegstück eingelegt bzw. entfernt zu werden.

Eine weitere zweckmäßige Maßnahme kann darin bestehen, daß das zwischen Bodenplatte und dem diese übergreifenden Kasten vorgesehene Verschiebespiel als Strömungsquerschnitt für die abzusaugende Luft ausgebildet ist. Hierdurch ist sichergestellt, daß sich der Kunststoff im Bereich der durch umlaufenden Kasten und Bodenplatte gebildeten Ecke zuverlässig an die Modellinnenkontur anlegt. Zweckmäßig können auch im Bereich der der unteren Stufe zugeordneten Ecke Absaugöffnungen vorgesehen sein.

In weiterer Fortbildung der übergeordneten Maßnahmen können der umlaufende Kasten und die Randleiste im Bereich einander gegenüberliegender, nach außen abstehender Befestigungsflansche lösbar aneinander festlegbar sein. Die Flansche können dabei durch einander zugeordnete Zentrierflächen begrenzt sein. Diese Maßnahmen ermöglichen einen zuverlässigen Sitz sowie einen schnellen Austausch der Randleiste.

Weitere vorteilhafte Ausgestaltungen und vorteilhafte Fortbildungen der übergeordneten Maßnahmen ergeben sich aus der nachstehenden Beschreibung anhand der Zeichnung in Verbindung mit den restlichen Unteransprüchen.

In der Zeichnung zeigen:

Figur 1     einen Teilschnitt durch einen Palettenstapel in schematischer Darstellung,

Figur 2     einen Teilschnitt durch einen anderen Palettenstapel in schematischer Darstellung und

Figur 3     eine schematische Darstellung einer Vorrichtung zur Herstellung derartiger Paletten teilweise im Schnitt.

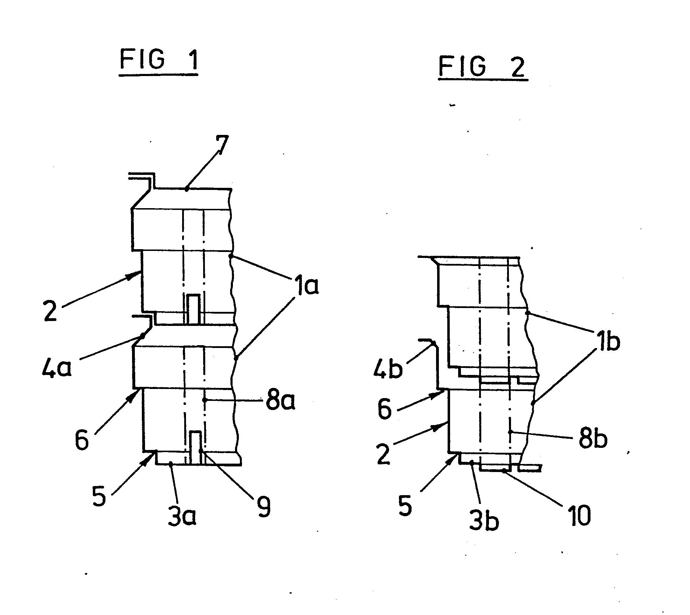

Die den Figuren 1 und 2 zugrunde liegenden Paletten 1a bzw. 1b bestehen jeweils aus einem umlaufenden Rahmen 2, an den einerseits ein Boden 3a bzw. 3b und andererseits eine umlaufende Randklaue 4a bzw. 4b angeformt sind, so daß sich ein wannenförmiges Gebilde ergibt. Der umlaufende Rahmen 2 besitzt eine an den Boden 3a bzw. 3b sich anschließende untere Stufe 5 und eine oberhalb dieser, hier etwa auf mittlerer Palettenhöhe, angeordnete obere Stufe 6. Die übereinander angeordneten
Stufen 5 und 6 ergeben eine von oben nach unten stufenförmig nach innen abgesetzte Wandkontur des umlaufenden Rahmens 2. Diese Stufen ermöglichen im
Falle einer Stapelung, eine gezielte Abstützung und
seitliche Fixierung der Paletten.

Bei dem der Figur 1 zugrunde liegenden Ausführungsbeispiel ist die an den umlaufenden Rahmen 2 oben
angesetzte Randklaue 4a so nach innen gekröpft und
hinterschnitten, daß bei der Bildung eines Stapels
die Randklaue 4a einer jeweils unteren Palette 1a
zum Eingriff mit der unteren Stufe 5 der jeweils
oberen Palette kommt. Die Breite der Stufe 5 und
die dementsprechende Abkröpfung und Hinterschneidung der Randklaue 4a können dabei einfach so ausgebildet sein, daß sich ein staubdichter Verschluß
ergibt. Die oberste Palette eines Stapels kann einfach mittels eines Deckels 7 abgedeckt werden, der
eine mit der zugeordneten Randklaue in formschlüssigen Eingriff bringbare Randkontur aufweisen kann.
Bei der Anordnung nach Figur 1 erreicht der lichte
Abstand zwischen den Böden der aufeinander gestapelten Paletten, also die lichte Palettenhöhe ein maximal mögliches Maß. Aufgrund der gegenseitigen Abstützung der aufeinander gestapelten Paletten wird dabei
die Stützkraft direkt über den umlaufenden Rahmen 2
der Paletten übertragen. Anordnungen dieser Art kommen daher überall dort zur Anwendung, wo der Boden 3a
durch das Gewicht der aufzunehmenden Werkstücke nicht
überlastet wird.

Bei der Anordnung gemäß Figur 2 ist die an den umlaufenden Rahmen 2 angesetzte Randklaue 4b einfach nach außen abgekröpft. Die Palttten 1b können daher für Transportzwecke so weit ineinander gestapelt werden, daß die untere Stufe 5 einer jeweils oberen Palette 1b auf der obrren Stufe 6 der jeweils unteren Palette 1b zur Auflage kommt. Im befüllten Zustand liegt der Boden 3b einer jeweils oberen Palette 1b auf den in die jeweils untere Palette 1b eingesetzten Werkstücken 8b auf, so daß das Gewicht durch diese übertragen wird. Anordnungen dieser Art finden daher dort Verwendung, wo der Boden 3b durch das Gewicht der aufzunehmenden Werkstücke überlastet würde. Der Palettenboden kann glatt oder profiliert sein oder, wie im Falle der Figur 1 mit Zapfen 9 oder wie im Falle der Figur 2 mit Nestern 10 für die jeweils aufzunehmenden Werkstücke 8a bzw. 8b versehen sein.

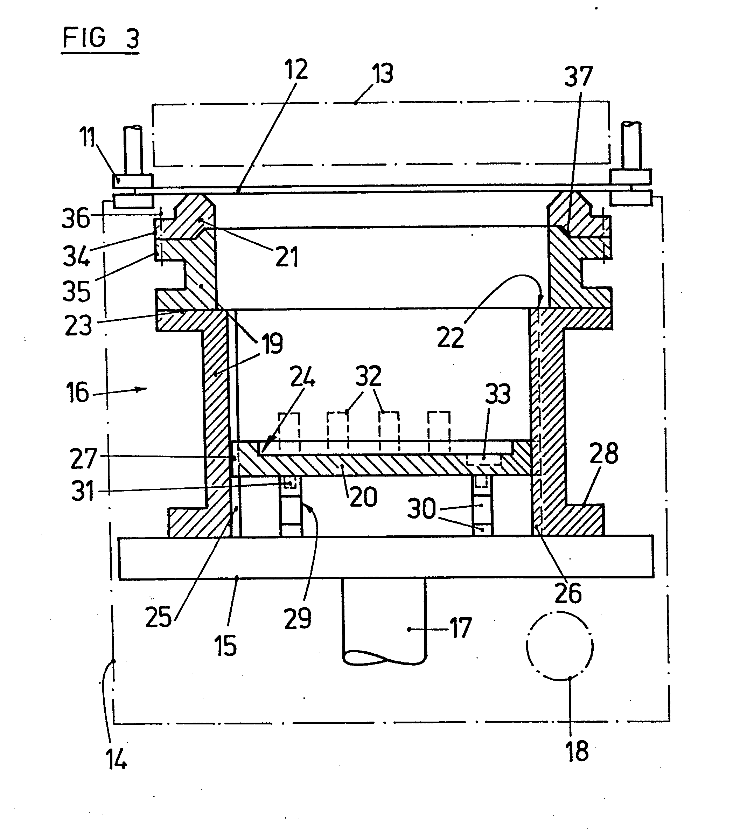

Die Paletten 1a bzw. 1b bestehen aus Kunststoff und werden im Tiefziehverfahren durch entsprechende Umformung einer Kunststoffplatte hergestellt. Die Tiefziehvorrichtung gemäß Figur 3 besteht in an sich bekannter Weise aus einem Spannrahmen 11, in den die umzuformende Kunststoffplatte 12 mit ihrem Rand eingespannt wird, einer der Kunststoffplatte 12 zugeordneten, auf- und abbewegbaren Heizungseinrichtung.13 sowie einem in einer evakuierbaren Kammer 14 angeordneten Halter 15 zur Aufnahme eines auswechselbaren Werkzeugs in Form eines Modells 16. Der Halter 15 ist mit einer Hubeinrichtung 17 versehen, so daß auch unterhalb der Kunststoffplatte 12 eine ein- und ausfahrbare Heizeinrichtung vorgesehen sein kann. Die evakuierbare Kammer 14 ist über einen Stutzen 18 mit einer Vakuumquelle, etwa in Form einer Evakuierpumpe , verbunden. Zur Bewerkstelligung des Umformvorgangs wird das Modell mit seiner Oberkante an die Kunststoffplatte 12 angestellt und anschließend die Kammer 14 evakuiert. Unter der Wirkung des Vakuums legt sich die erwärmte Kunststoffplatte 12 an das Modell an. Die Innenoberfläche des Modells entspricht dabei der Außenoberfläche der herzustellenden Palette.

Zur Vereinfachung von bodenseitig sowie randklauenseitig und höhenmäßig an den jeweiligen Bedarfsfall angepaßten Paletten der aus den Figuren 1 und 2 entnehmbaren Art findet ein mehrteiliges Modell Verwendung, das einen umlaufenden, hinsichtlich seiner Konturierung dem umlaufenden Palettenrahmen entsprechenden Kasten 19 aufweist, der wahlweise mit hiervon getrennten, als Wechselelementen ausgebildeten Bodenplatten 20 und/oder Randleisten 21 verschiedener Kontur kombinierbar ist. Je nach der gewünschten Bodenkontur bzw. Randklauenkontur ist daher nur die entsprechende Bodenplatte 20 bzw. die entsprechende Randleiste 21 einzusetzen. Der umlaufende Kasten 19 bleibt immer derselbe, was die Werkzeugkosten senkt und die Bereitstellung von zur Herstellung unterschiedlicher Paletten benötigten Werkzeugen erleichtert.

Die der palettenseitigen oberen Stufe 6 zugeordnete werkzeugseitige Konturierung in Form einer Stufe 22 ist an den umlaufenden Kasten 19 angeformt. Zur Erleichterung der Herstellung kann der Kasten 19 hierzu mit einer Teilfuge 23 versehen sein und aus zwei fest miteinander verbundenen, aufeinander aufgesetzten Teilen bestehen. Aber auch eine einteilige Ausführung des Kastens 19 wäre denkbar. Die der palettenseitigen unteren Stufe 5 zugeordnete werkzeugseitige Konturierung in Form einer Stufe 24 ist an die Bodenplatte 20 angeformt. Hierdurch ist sichergestellt, daß sich die Kontur des Kastens 19 unterhalb der Stufe 22 nicht ändert, so daß die Bodenplatte 20 innerhalb des Kastens 19 zwischen Halter 15 und der Stufe 22 verschoben werden kann. Die Außenkontur der Bodenplatte 20 entspricht daher der Innenkontur des Kastens 19 unterhalb der Stufe 22. Im dargestellten Ausführungsbeispiel sind im Bereich des Kastens 19 zur Erzeugung von Versteifungsrippen am fertigen Palettenprodukt abwechselnd Nuten 25 und Stege 26 vorgesehen, die im Eingriff mit entsprechenden Stegen bzw. Nuten im Bereich des Außenumfangs der Bodenplatte 20 sind. Sofern ein glatter Palettenrahmen erwünscht ist, entfallen die Nuten 25 und Stege 26. Zwischen der Außenkontur der stempelförmig in den Kasten 19 eingreifenden Bodenplatte 20 und der Innenkontur des Kastens 19 besteht lediglich das zur Ermöglichung einer entsprechenden Verschiebung erforderliche Verschiebespiel. Dieses bildet in vorteilhafter Weise gleichzeitig einen Strömungsquerschnitt 27 für die aus dem Modellinnenraum zu saugende Luft. Weitere Absaugausnehmungen können zur Gewährleistung einer sauberen Anlage des Tiefziehmaterials im Bereich der Randkanten von horizontalen Modellflächen vorgesehen sein.

Der umlaufende Kasten 19 ist mit einem im Bereich seines unteren Endes vorgesehenen Fußflansch 28 am Halter 15 festlegbar. Die in den Kasten 19 stempelförmig eingreifende Bodenplatte 20 ist separat hiervon durch Distanzböcke 29 auf dem Halter 15 abstützbar. Zur Herstellung von Paletten mit verschiedenem Abstand zwischen der unteren Stufe 5 und der oberen Stufe 6 wird einfach die Höhe der Distanzböcke 29 verändert. Hierzu können die Distanzböcke 29 insgesamt ausgetauscht und durch andere ersetzt werden. Im dargestellten Ausführungsbeispiel bestehen die Distanzböcke 29 aus mehreren Klötzen 30, so daß zur Änderung der Höhenlage der Bodenplatte 20 einfach ein Klotz bzw. einige Klötze eingefügt bzw. herausgenommen werden können. Im Bereich des Anlagequerschnitts der Bodenplatte 20 auf den Distanzböcken 29 kann ein Kanal 31 zur Aufnahme einer Kühlschlange versehen sein. Die Distanzböcke 29 bilden daher zweckmäßig über die ganze Länge bzw. Breite der Bodenplatte 20 sich erstreckende Leisten. Die Oberflächenkontur der Bodenplatte 20, in dem von der Stufe 24 begrenzten Bereich entspricht der gewünschten Bodenkontur der herzustellenden Palette. Zur Herstellung der in den Figuren 1 bzw. 2 angedeuteten Zapfen 9 bzw. Nester 10 können die dem Kasten 19 zugeordneten verschiedenen Bodenplatten 20 mit entsprechenden zapfenförmigen Aufsätzen 32 bzw. nesterförmigen Ausnehmungen 33 versehen sein, wie in Figur 3 durch gestrichelte Linien angedeutet ist.

Die umlaufende Randleiste 21 ist zur Bildung eines oberen Kastenabschlusses einfach auf die obere Kastenstirnseite aufgesetzt. Die Randleiste 21 ist mit einem nach außen wegstehenden Befestigungsflansch 34 versehen, dem ein entsprechender Gegenflansch 35 des Kastens 19 zugeordnet ist. Die Befestigung kann einfach durch in Figur 3 lediglich durch ihre Mittellinien angedeutete Verbindungsschrauben 36 erfolgen. Zur Bewerkstelligung einer einfachen Zentrierung sind konische Anlageflächen 37 vorgesehen, die hier die Flansche 34 bzw. 35 begrenzen. Die in Figur 3 dargestellte Randleiste 21 dient zur Herstellung einer nach außen abgekröpften Randklaue 4b gemäß Figur 2. Sofern Paletten mit anderer Randklaue hergestellt werden sollen, wird die Randleiste 21 einfach gegen die entsprechende andere Randleiste ausgewechselt. Zur Herstellung einer nach innen abgekröpften, hinterschnittenen Randklaue 4a gemäß Figur 1 kann eine Randleiste mit in die Hinterschneidung eingreifenden Klappen bzw. Schiebern Verwendung finden. Die als Wechselelemente vorhandenen Randleisten können mit jeder ebenfalls als Wechselelement vorhandenen Bodenplatte kombiniert werden. Hierdurch ergeben sich demnach vielfältige Variationsmöglichkeiten, die durch die variable Höhenlage der Bodenplatte noch erhöht werden.

Die Distanzböcke ergeben eine stufenförmige Verstellung der Bodenplatte, wobei der Stufenabstand sehr klein gewählt werden kann, was vielfach ausreicht. Es wäre aber auch eine stufenlose Verstellbarkeit denkbar.

A n s p r ü c h e

1.Palettensystem mit mehreren, aus Kunststoff bestehenden Paletten (1a, 1b), die jeweils die Form einer stapelbaren Wanne mit einem umlaufenden Rahmen
(2), an den einerseits ein Boden (3a, 3b) und andererseits eine Randklaue (4a,4b) angeformt sind,
aufweisen, dadurch gekennzeichnet, daß die einzelnen Paletten (1a, 1b) als Tiefziehformlinge ausgebildet sind, daß der umlaufende Rahmen (2) sämtlicher Paletten (1a, 1b) dieselbe oder eine geometrisch ähnliche, durch eine obere Stufe (6) und
eine untere Stufe (5) stufenförmig nach innen gesetzte Wandkontur aufweist und daß die einzelnen
Paletten (1a, 1b) sich jeweils nur durch die Höhe
des umlaufenden Rahmens (2) und/oder die Profillierung ihres Bodens (3a, 3b) und/oder ihrer Randklaue
(4a, 4b) unterscheiden.

2. Vorrichtung zur Herstellung eines Palettensystems nach Anspruch 1 mit einem auf einem Halter (15) aufnehmbaren Modell (16), dessen Innenkontur der Außenkontur des jeweils herzustellenden Gegenstands entspricht und dessen Innenraum an eine Vakuumquelle anschließbar ist, dadurch gekennzeichnet, daß das Modell (16) jeweils einen umlaufenden Kasten (19), eine hiervon getrennte Bodenplatte (20) und eine ebenfalls hiervon getrennte Randleiste (21) aufweist und daß einem umlaufenden Kasten (19) jeweils mehrere Bodenplatten (20) und/oder Randleisten (21) zugeordnet sind, die auswechselbar auf dem Halter (15) bzw. dem Kasten (19) festlegbar sind.

3. Vorrichtung nach Anspruch 2, dadurch gekennzeichnet, daß die der unteren Stufe (5) entsprechende Modellkontur an die Bodenplatte (20) und die der oberen Stufe (6) zugeordnete Modellkontur an den umlaufenden Kasten (19) angeformt ist.

4. Vorrichtung nach Anspruch 3, dadurch gekennzeichnet, daß der umlaufende Kasten (19) im Bereich der der oberen Stufe (6) zugeordneten Modellkontur (22) eine Teilfuge (23) aufweist.

5. Vorrichtung nach einem der vorhergehenden Ansprüche 2 bis 4, dadurch gekennzeichnet, daß die Randkontur der Bodenplatte (20) der im Bereich unterhalb der der oberen Stufe (6) zugeordneten Modellkontur (22) gleichbleibenden Querschnittskontur des Kastens (19) entspricht und daß die Bodenplatte (20) mit Verschiebespiel stempelförmig in den Kasten (19) eingreift und in der Höhe variabel festlegbar ist.

6. Vorrichtung nach Anspruch 5, dadurch gekennzeichnet, daß die Bodenplatte (20) durch in der Höhe variierbare, vorzugsweise mehrteilige Distanzböcke (29) unabhängig vom umlaufenden Kasten (19) gegenüber dem Halter (15) abstützbar ist.

7. Vorrichtung nach Anspruch 6, dadurch gekennzeichnet, daß die Distanzböcke (29) mit einem Kühlkanal (31) versehen sind.

8. Vorrichtung nach einem der vorhergehenden Ansprüche 2 bis 7, dadurch gekennzeichnet, daß das zwischen Bodenplatte (20) und dem diese übergreifenden Kasten (19) vorgesehene Verschiebespiel als Strömungsquerschnitt (27) für die abzusaugende Luft ausgebildet ist.

9. Vorrichtung nach einem der vorhergehenden Ansprüche 2 bis 8, dadurch gekennzeichnet, daß der Kasten (19) und die Randleiste (21) im Bereich einander gegenüberliegender, nach außen abstehender Befestigungsflansche (34, 35) lösbar aneinander festlegbar sind, die vorzugsweise durch einander zugeordnete Zentrierflächen (37) begrenzt sind.

FIG 1

FIG 2

FIG 3